# EUROPÄISCHE PATENTSCHRIFT

(11) **EP 1 142 041 B1**
(45) Veröffentlichungstag und Bekanntmachung des Hinweises auf die Patenterteilung: **26.11.2003**
(21) Anmeldenummer: 99952618.9
(22) Anmeldetag: 20.10.1999
(51) Int. Cl.: H01M 2/02

(54) **BATTERIEHÜLSE AUS UMGEFORMTEM, KALTGEWALZTEM BLECH SOWIE VERFAHREN ZUR HERSTELLUNG VON BATTERIEHÜLSEN**
BATTERY SHEATH MADE OF A FORMED COLD-ROLLED SHEET AND METHOD FOR PRODUCING BATTERY SHEATHS
GAINE DE PILE CONSTITUEE DE TOLE LAMINEE A FROID ET AYANT SUBI UN FORMAGE, ET PROCEDE DE PRODUCTION DE GAINES DE PILES

(30) Priorität: 12.11.1998 DE 19852202
(43) Veröffentlichungstag der Anmeldung: 10.10.2001
(73) Patentinhaber: Hille & Müller GmbH, 40589 Düsseldorf (DE)
(72) Erfinder: SCHMIDT, Ferdinand, D-40593 Düsseldorf (DE); SCHENCK, Anette, D-40479 Düsseldorf (DE); MONSCHEUER, Beate, D-40789 Monheim (DE); KOSSLERS, Helmut, D-41366 Schwalmtal (DE); FERENCZY, Nikolaus, D-47781 Haan (DE); BORISCH, Annette, D-42105 Wuppertal (DE); OLBERDING, Werner, D-42553 Velbert (DE)
(74) Vertreter: Stenger, Watzke & Ring Patentanwälte
(86) Internationale Anmeldenummer: EP9907961
(87) Internationale Veröffentlichungsnummer: WO00030188

(56) Entgegenhaltungen:
- EP-A- 0 725 453
- PATENT ABSTRACTS OF JAPAN vol. 012, no. 162 (E-609), 17. Mai 1988 (1988-05-17) & JP 62 274568 A (MATSUSHITA ELECTRIC IND CO LTD), 28. November 1987 (1987-11-28)
- PATENT ABSTRACTS OF JAPAN vol. 1996, no. 05, 31. Mai 1996 (1996-05-31) & JP 08 017406 A (MATSUSHITA ELECTRIC IND CO LTD), 19. Januar 1996 (1996-01-19)

## Beschreibung

Die Erfindung betrifft zunächst eine Batteriehülse aus umgeformtem, kaltgewalztem Blech, die zumindest auf ihrer Innenseite mit einem galvanisch hergestellten Überzug enthaltend Ni, Co, Fe, Sn, In, Pd, Bi und/oder deren Legierungen versehen ist.

Die Erfindung betrifft ferner ein Verfahren zur Herstellung von Bandmaterial für Batteriehülsen, bei dem kaltgewalztes Blech in einem galvanischen Bad mit einem Überzug versehen wird.

Die Qualität von Batterien bestimmt sich u. a. danach, wie lange die garantierte Nennspannung und Kapazität gehalten werden kann. Je höher der innere Widerstand der Batterie ist, desto geringer ist die Spannung der Batterie in belastetem Zustand. Ein weiteres wichtiges Merkmal für die Güte einer Batterie ist deren Verhalten bei längerer Lagerung. Eine lange Lagerung führt zu einem Ansteigen des inneren Widerstandes der Batterie. Dabei hängen der innere Widerstand sowie dessen Zunahme bei langer Lagerung von mehreren Faktoren ab: Bei der Herstellung der Batterie ist der Kontakt zwischen der z. B. aus vernickeltem Stahlblech bestehenden Elektrode und der Füllung der Batterie, die aus EMD-Mangandioxid, Graphit und Kaliumhydroxidelektrolyt besteht, oft nicht ausreichend. Für die Erhöhung des inneren Widerstandes der Batterie ist ferner ausschlaggebend, daß sich während der Lagerung auf der Nickeloberfläche eine Oxid-/Hydroxidschicht bildet, die gleichsam wie eine Trennschicht den innigen Kontakt mit der Füllmasse verhindert. Diese Erscheinung kann bereits bei neu hergestellten Batterien entstehen, wenn die auf der Innenseite mit der Nickelschicht versehenen Batteriehülsen oxidiert sind.

Um diesen Nachteilen zu begegnen, sind bereits verschiedene Maßnahmen bei der Herstellung von Batterien ergriffen worden. So ist es bekannt, die Batteriehülse axial einzukerben, um beim Füllen der Batterie an dieser Einkerbung einen höheren radial Druck auszuüben und so den Kontakt zu der Batteriehülse zu verbessern. Auf diese Weise kann jedoch keine gleichmäßige Herabsetzung des Widerstandes bewirkt werden. Ferner ist bekannt, ein Graphitpulver auf die Innenseite der Batteriehülse aufzubringen, um dort den inneren Widerstand der Batterie nach der Füllung zu verringern. Eine solche Methode ist aufwendig und damit teuer.

Aus der WO 98/18170 ist es bekannt, bei der Herstellung von Elektroden für Batterien die Elektroden zu beschichten, indem diese mit einem Lack überzogen werden. Der Lack enthält elektrodenaktives Material, Bindemittel, Lösungsmittel und Säure. Nachdem eine Seite der Elektrode auf diese Weise beschichtet wurde, wird die so hergestellte Schicht zunächst getrocknet, bevor eine entsprechende Beschichtung der anderen Seite der Elektrode erfolgt.

Aus der japanischen Veröffentlichung JP-A H 9-171802 ist die Herstellung einer Batteriehülse bekannt, bei der deren Innenseite mit einer organischen Beschichtung versehen wird, und durch anschließendes Erhitzen eine Karbonisierung der beschichteten Fläche eintritt. Die beschichtete Fläche kann ferner weitere Schichten aus metallischem Chrom oder Chromhydroxid aufweisen.

Der Erfindung liegt die Aufgabe zugrunde, eine Batteriehülse zur Herstellung von Batterien zu schaffen, die sich bei langer Lagerung durch eine im Vergleich zu bekannten Batterien geringere Erhöhung des inneren Widerstandes auszeichnet. Des weiteren soll ein Verfahren zur Herstellung von Bandmaterial für die Herstellung von derartigen Batteriehülsen entwickelt werden.

Hierzu wird bei einer Batteriehülse der eingangs genannten Art vorgeschlagen, daß zur Verringerung des inneren Widerstandes der späteren Batterie in den galvanischen Überzug in disperser Form elektrisch leitfähige Partikel wie z. B. elementarer Kohlenstoff als feiner Kohlenstoff, Graphit oder Ruß oder z. B. Titandisulfid, Tantaldisulfid oder Molybdänsilicid oder Mischungen aus diesen eingelagert sind.

Bei Verwendung von Kohlenstoff beträgt der Kohlenstoffgehalt des galvanischen Überzuges 0,7% bis 15%. Die Dicke des galvanischen Überzuges beträgt vorzugsweise 0,2 µm bis 8 µm auf einer Seite oder auf beiden Seiten des zu der Batteriehülse verarbeiteten Bandmaterials.

Hinsichtlich des zur Herstellung von Bandmaterial für eine solche Batteriehülse geeigneten Verfahrens wird vorgeschlagen, das als Ausgangsmaterial verwendete, kaltgewalzte Blech mit einer Dicke von 0,1 bis 1 mm in einem galvanischen Bad zumindest auf einer Seite mit einem Überzug aus Ni, Co, Fe, Sn, In, Pd, Bi und/oder deren Legierungen zu versehen, wobei das galvanische Bad als weiteren Bestandteil elektrisch leitfähige Partikel wie z. B. elementaren Kohlenstoff, als feiner Kohlenstoff, Graphit oder Ruß oder z. B. Titandisulfid, Tantaldisulfid oder Molybdänsilicid enthält, wobei dieser Bestandteil/diese Bestandteile bei der Galvanisierung gemeinsam mit dem Ni, Co, Fe, Sn, In, Pd, Bi bzw. deren Legierungen auf dem Ausgangsmaterial abgeschieden wird/werden.

Vorzugsweise liegt die die mit den elektrisch leitfähigen Bestandteilen versehene galvanische Schicht aufweisende Seite des Bleches bei dessen Umformung zu einer Batteriehülse innen.

Batterien, bei denen die nach einem solchen Verfahren hergestellten Batteriehülsen eingesetzt werden, zeichnen sich im Vergleich zu bekannten Batterien durch eine geringere Erhöhung des inneren Widerstandes bei längerer Lagerung aus. Ferner kann auch der anfängliche innere Widerstand selbst von Batterien, die aus Batteriehülsen nach dem erfindungsgemäßen Verfahren hergestellt sind, wesentlich niedriger sein, als dies bei herkömmlichen Batteriehülsen der Fall ist, die z. B. aus nur vernickeltem Stahlband hergestellt sind.

Die genannten Vorteile bezüglich des inneren Widerstandes der Batterie werden insbesondere bei Überzügen aus Kombinationen der Elemente Nickel, Kobalt und Graphit erzielt. Jedoch haben sich auch abgeschiedene Schichten unter Verwendung von Eisen, Zinn, Indium, Palladium und Wismut bzw. aus Legierungen der genannten Elemente als geeignet für den Überzug von Batteriehülsen erwiesen.

Bei Verwendung in dem galvanischen Bad suspensierten Kohlenstoffs kommen in erster Linie feinverteilte elektrisch leitfähige Partikel aus elementarem Kohlenstoff (Graphit oder Ruß) in Betracht. Vorzugsweise beträgt die Partikelgröße 0,5 bis 15 µm.

Zur Erzielung der angestrebten Einlagerung des Kohlenstoffs in disperser Form in dem galvanischen Überzug wird mit einer Ausgestaltung des Verfahrens vorgeschlagen, daß in dem galvanischen Bad während des Galvanisierungsprozesses eine gleichmäßige Strömung erzeugt wird. Vorzugsweise wird zur Erzielung der gleichmäßigen Strömung das galvanische Bad gleichmäßig umgewälzt. Als besonders geeignet hat sich eine erzwungene Strömungsgeschwindigkeit des Elektrolyts von 6 bis 10 m/s herausgestellt.

Mit einer weiteren Ausgestaltung des Verfahrens wird vorgeschlagen, daß das galvanische Bad suspensionsstabilisierende und/oder koagulationsmindernde Substanzen enthält, um so eine gleichmäßige Verteilung der elektrisch leitfähigen Partikel ohne örtliche oder zeitliche Konzentrationen zu erzielen.

Vorteilhaft kann es auch sein, das galvanische Bad mit solchen stabilisierenden und/oder koagulationsmindernden Substanzen zu versehen, die, wie dies z. B. bei sogenannten Glanzbildnern der Fall ist, zu harten spröden Schichten führen. Ferner können die zugefügten Substanzen auch als Glanzmittel oder porenvermindemde Mittel wirken.

Bei einer Ausgestaltung des Verfahrens erfolgt die galvanische Abscheidung in mehreren Stufen, wobei in mindestens einer dieser Stufen das galvanische Bad den elementaren Kohlenstoff enthält. Vorzugsweise wird das Material zwischen den galvanischen Behandlungsstufen geglüht. Des weiteren ist es möglich, eine thermische Behandlung auch abschließend durchzuführen, d. h. nach dem Abschluß der ein- oder mehrstufigen Abscheidung. Die thermische Glühbehandlung erfolgt in einer innerten Schutzgasatmosphäre mit einer von der verwendeten Stahlgüte abhängigen Temperatur im Bereich von 550° C bis 920° C. Die Glühbehandlung führt zur Rekristallisation des Substrates und zur Diffusion des abgeschiedenen Nickel/Kobalt/Eisen/Zinn/Indium/Palladium/Wismut in das Grundmaterial hinein. Dies führt - neben der eigentlichen Rekristallisation des Substrats zur Ermöglichung einer späteren Umformung - auch zu einer guten Haftung der Veredelungsschicht auf dem Grundmaterial bei der Umformung und ferner zu guten Korrosionsschutzeigenschaften des Produkts.

Bei mehrstufiger Abscheidung, wobei zumindest in einer dieser Stufen das Elektrolytbad Kohlenstoff enthält, können diese Stufen unmittelbar nacheinander angeordnet sein, so daß im on-line-Betrieb verschiedene Teilschichten hintereinander abgeschieden werden. Es ist aber ebenso möglich, zwischen den Galvanisierungsstufen eine thermische Behandlung durch Glühen des Materials einzuführen, um so die partielle Diffusion der abgeschiedenen Metallschicht in das Grundmaterial zu erzielen. Ferner ist es möglich, drei- oder mehrstufig zu arbeiten, wobei zwischen zwei oder mehr Galvanisierungen mit jeweils graphitfreien Elektrolyten eine Galavanisierungsstufe mit Kohlenstoff-Partikeln durchgeführt wird. Auch in diesem Fall kann zwischen den einzelnen Galvanisierungstufen eine thermische Behandlung durch Glühen erfolgen.

Ausgangsmaterial bei der Herstellung der Batteriehülsen ist kaltgewalztes Band, welches in galvanisch nickelüberzogener Ausführung weite Verbreitung bei der Herstellung der Batteriehülsen gefunden hat. Erfindungsgemäß sind in dem galvanischen Bad nicht nur Ni, Co, Fe, Sn, In, Pd und/oder Bi enthalten, sondern feinverteilt befinden sich darin in Form einer Suspension auch leitfähige Partikel aus feinem Kohlenstoff, Graphit, Ruß, TaS₂ (Tantaldisulfid), TiS₂ (Titandisulfid) oder MoSi₂ (Molybdänsilicid). Bei der elektrolytischen Behandlung des kaltgewalzten Bleches nach vorherigem Entfetten, Spülen, Dekapieren, Spülen etc., bildet sich auf der Oberfläche eine gemeinsame Abscheidung sowohl der vorgenannten Elemente, als auch der leitfähigen Partikel. Zur Erzielung einer gleichmäßigen Beaufschlagung der beschichteten Flächen, und um den Zustand und die Zusammensetzung des Elektrolyten konstant zu halten, bestehen zwei unterschiedliche Methoden:

Bei der ersten Methode werden z. B. feinverteilte Kohlenstoffpartikel oder Graphit oder Ruß in einer Partikelgröße zwischen 0,5 und 15 µm im Elektrolyt, z. B. einem Watt'schen Nickelelektrolyt, suspendiert und durch starke Bewegung des Elektrolytbades in der Schwebe gehalten. Zur Erzielung dieser Bewegung kann ein Rührwerk eingesetzt werden, oder es kann auf andere Weise eine erzwungene Strömung erzeugt werden. Bei der zweiten Methode wird zwar ebenfalls eine mechanische Bewegung des galvanischen Bades angewendet, jedoch werden in Ergänzung dem galvanischen Bad Zusätze zugegeben, die die Suspension gleichmäßig halten und die Ausflockung und Koagulation der Partikel verhindern.

Zweckmäßig ist es, die die elektrisch leitfähigen Partikel und insbesondere den Kohlenstoff enthaltende Metallschicht nur auf einer Seite des Stahlblechs aufzutragen, und zwar auf jener Seite, die später die Innenseite der gefertigten Batteriehülse bildet. Dies führt zu einem wirtschaftlichen Herstellungsprozeß, ferner läßt sich auf der Außenseite der Batteriehülse die gewohnte Oberfläche beibehalten. Jedoch kann es für spezielle Anwendungen vorteilhaft sein, daß sich auch eine kohlenstoffhaltige Metallschicht auf der Außenseite der Batteriehülse befindet. In diesem Zusammenhang können z. B. ein verringerter Kontaktwiderstand der Batteriehülse oder verbesserte tribologische Eigenschaften angestrebt sein. Die Formung der Batteriehülse erfolgt durch eines der an sich bekannten Verfahren durch Anwendung von mehrstufigen Abstreck- oder Tiefziehumformungen des erfindungsgemäß veredelten Bleches.

Kaltgewalztes Stahlband kann in einer speziell für die Bandveredelung ausgelegten Anlage z. B. wie folgt behandelt werden:
- elektrolytisches Entfetten mit hoher Stromdichte von 30 - 50 A/dm²
- Spülen
- Dekapieren in 3 - 5 %iger Schwefelsäure
- Spülen
- Vernickeln in einem Watts-Nickelbad mit folgender Zusammensetzung:
   - Nickel 50 - 80 g/l als Nickelsulfat
   - Chlorid 10 - 30 g/l als Nickelchlorid
   - Borsäure 35 - 45 g/l
   - Kohlenstoff 20 - 80 g/l, Partikelgröße 0,5 - 15 µm
   - pH-Wert 2,1 - 3,5
   - Temperatur 55 - 80°C
   - Stromdichte 5 - 20 A/dm²
- Bewegung vorwiegend laminar, teilweise turbulent
- Elektrolytströmung 6 - 10 m/s

Eine weitere Variante der galvanischen Veredelung besteht darin, daß suspensionsstabilisierende und koagulationsverhindernde Substanzen dem Bad zugegeben werden. Dies können z. B. Kondensationsprodukte aus Formaldehyd und Naphtalinsulfonsäure, weiterhin Ethylenglycol und Ethylenalkohol sein. In diesem Fall kann die turbulente Bewegung etwas niedriger sein, eine Elektrolytströmung von 2 - 8 m/s hat sich als geeignet herausgestellt.

Die wie oben angegeben hergestellten Nickelschichten betragen 0,2 - 8 µm. Der Graphit (C)-Gehalt in der Nickelschicht beträgt 0,7 - 15 %.

Es wurde noch gefunden, daß vorteilhafterweise anstelle von Nickel in der C-Dispersionsschicht auch noch Kobalt, Eisen, Zinn, Indium, Palladium, Wismut und/oder deren Legierungen verwendet werden kann, wobei die Zusammensetzung des Kobaltbades einschließlich Graphit dem obengenannten Nickelbad entspricht.

### Beispiel 1:

Bandmaterial aus Stahl mit einer Dicke von 0,2 - 0,45 mm wird in einem Nickelbad nach Entfetten, Spülen, Dekapieren, Spülen wie folgt vernickelt:

| Nickelbadzusammensetzung: | |
|---|---|
| Nickel | 60 g/l als Nickelsulfat |
| Chlorid | 30 g/l als Nickelchlorid |
| Borsäure | 40 g/l |
| Graphit | 40 g/l, Komgröße 1 - 8 µm |
| pH-Wert | 2,3 |
| Temperatur | 60 °C |
| Stromdichte | 15 A/dm² |
| Bewegung | turbulent |
| Elektrolytströmung | 6 - 10 m/s |

Die so hergestellte Schicht enthält ca. 1,7 % Graphit

### Beispiel 2:

Die Zusammensetzung des Nickelbades entspricht jener in Beispiel 1. Lediglich werden suspensionsstabilisierende Mittel und koagulationsverhindernde Substanz zugegeben. Die Bewegung ist mäßiger, die Elektrolyströmung beträgt nur ca. 4 m/s. Der Graphitgehalt der abgeschiedenen Nickelschicht beträgt 9,0 %.

Der Schichtaufbau, der nach Beispielen 1 und 2 hergestellt wird, kann folgende Zusammensetzung haben:

Die Gesamtschichtstärke von 0,2 - 2 µm wird mit Graphiteinlagerung hergestellt. Gemäß einer Variante hierzu kann zunächst eine Nickelschicht von 1,0 - 1,5 µm ohne Graphiteinlage hergestellt werden, nach dem Glühen und Dressieren wird eine zusätzliche Schicht von ca. 0,3 - 0,5 µm mit Graphiteinlagerung abgeschieden.

### Beispiel 3:

### Herstellung von Nickel-Kobalt mit Graphiteinlagerungen

Bei der Herstellung von Nickel-Kobalt-Überzügen mit Graphiteinlagerungen sind Stärke und Zusammensetzung des Bandmaterials identisch Beispiel 1. Die Vorbehandlung ist ebenfalls identisch. Zuerst wird Reinnickel aus dem Elektrolyt, wie in Beispiel 1 beschreiben, abgeschieden, ohne Graphiteinlagerung. Die zweite Schicht nach dem Glühen und Dressieren wird in einem Kobaltelektrolyt mit Graphiteinlage erzeugt.
Auch eine reine Kobaltbeschichtung mit Graphiteinlagerung ist möglich.

### Beispiel 4:

### Herstellung von Nickel-Eisen-Legierungen mit Kohlenstoffeinlagerungen (Graphit, Ruß)

Nach der bekannten Vorbehandlung (siehe Beispiel 1) wird die Bandoberfläche mit einem Elektrolyten der folgenden Zusammensetzung beschichtet:

| | |
|---|---|
| Nickel | 47 g/l als Nickelsulfat |
| Chlorid | 15 g/l als Nickelchlorid |
| Eisen | 1 - 4 g/l als Eisen(II)Sulfat |
| Borsäure | 45 g/l |
| Graphit | 40 g/l Komgröße 1-8 µm |
| pH-Wert | 2,3 |
| Temperatur | 60° C |
| Stromdichte | 2 - 12 A/dm² |
| Fe-Gehalt im Niederschlag | 4 - 55 % je nach Fe-Konzentration und Stromdichte |

### Beispiel 5:

### Herstellung von Nickel-Zinn-Legierungen mit Kohlenstoffeinlagerungen (Graphit, Ruß)

| | |
|---|---|
| Zinn | 25 g/l als Zinnchlorid |
| Nickel | 60 g/l als Nickelchlorid |
| Fluorid | 30 g/l als Ammoniumbifluorid |
| Graphit | 30 g/l Komgröße 1-8 µm |
| pH-Wert | 4,5 |
| Temperatur | 60° C |
| Stromdichte | 1 - 4 A/dm² |
| Sn-Gehalt im Niederschlag | 30 - 40 % je nach Stromdichte und Temperatur |

## Patentansprüche

1. Batteriehülse aus umgeformtem, kaltgewalztem Blech, die zumindest auf ihrer Innenseite mit einem galvanisch hergestellten Überzug enthaltend Ni, Co, Fe, Sn, In, Pd, Bi und/oder deren Legierungen versehen ist,
**dadurch gekennzeichnet,**
**daß** zur Verringerung des inneren Widerstandes der späteren Batterie in den galvanischen Überzug in disperser Form elektrisch leitfähige Partikel wie z. B. elementarer Kohlenstoff als feiner Kohlenstoff, Graphit oder Ruß oder z. B. Titandisulfid, Tantaldisulfid oder Molybdänsilicid oder Mischungen aus diesen eingelagert sind.

2. Batteriehülse nach Anspruch 1, **dadurch gekennzeichnet, daß** der Kohlenstoffgehalt des galvanischen Überzuges 0,7% bis 15% beträgt.

3. Batteriehülse nach Anspruch 1 oder Anspruch 2, **dadurch gekennzeichnet, daß** die Dicke des galvanischen Überzuges 0,2 µm bis 8 µm auf einer Seite oder auf beiden Seiten beträgt.

4. Verfahren zur Herstellung von Bandmaterial für Batteriehülsen, bei dem kaltgewalztes Blech mit einer Dicke von 0,1 bis 1 mm in einem galvanischen Bad zumindest auf einer Seite mit einem Überzug aus Ni, Co, Fe, Sn, In, Pd, Bi und/oder deren Legierungen versehen wird, wobei das galvanische Bad als weiteren Bestandteil elektrisch leitfähige Partikel wie z. B. elementaren Kohlenstoff als feiner Kohlenstoff, Graphit oder Ruß oder z. B. Titandisulfid, Tantaldisulfid oder Molybdänsilicid enthält, wobei dieser Bestandteil/diese Bestandteile bei der Galvanisierung gemeinsam mit dem Ni, Co, Fe, Sn, In, Pd, Bi bzw. deren Legierungen auf dem Ausgangsmaterial abgeschieden wird/werden.

5. Verfahren nach Anspruch 4, **dadurch gekennzeichnet, daß** die die mit den elektrisch leitfähigen Bestandteilen versehene galvanische Schicht aufweisende Seite des Bleches bei dessen Umformung zu einer Batteriehülse innen liegt.

6. Verfahren nach Anspruch 3 oder Anspruch 4, **dadurch gekennzeichnet, daß** der Kohlenstoff als in Partikeln feinverteilter Kohlenstoff, Graphit oder Ruß in dem galvanischen Bad suspendiert ist.

7. Verfahren nach Anspruch 6, **gekennzeichnet durch** eine Partikelgröße der Kohlenstoff-, Graphit- bzw. Rußpartikel von 0,5 µm bis 15 µm.

8. Verfahren nach einem der Ansprüche 4 bis 6, **dadurch gekennzeichnet, daß** in dem galvanischen Bad während des Galvanisierungsprozesses eine gleichmäßige Strömung erzeugt wird.

9. Verfahren nach Anspruch 8, **dadurch gekennzeichnet, daß** die gleichmäßige Strömung durch mechanisches Rühren, Umwälzen oder Fluten erzeugt wird.

10. Verfahren nach Anspruch 8 oder Anspruch 9, **gekennzeichnet durch** eine erzwungene Strömungsgeschwindigkeit des Elektrolyts von 6 bis 10 m/s.

11. Verfahren nach einem der Ansprüche 8 bis 10, **dadurch gekennzeichnet, daß** das galvanische Bad suspensionsstabilisierende und/oder koagulationsmindernde Substanzen enthält.

12. Verfahren nach einem der Ansprüche 4 bis 11, **dadurch gekennzeichnet, daß** das galvanische Bad Substanzen enthält, die zu harten, spröden Schichten führen (sog. Glanzbildner).

13. Verfahren nach einem der Ansprüche 4 bis 12, **dadurch gekennzeichnet, daß** das galvanische Bad Glanzmittel oder porenvermeidende Mittel enthält.

14. Verfahren nach einem der Ansprüche 4 bis 13, **dadurch gekennzeichnet, daß** die galvanische Abscheidung in mehreren Stufen erfolgt, und in mindestens einer dieser Stufen das galvanische Bad elementaren Kohlenstoff enthält.

15. Verfahren nach Anspruch 14, **dadurch gekennzeichnet, daß** das Material zwischen den galvanischen Behandlungsstufen thermisch behandelt oder geglüht wird.

16. Verfahren nach Anspruch 14, **dadurch gekennzeichnet, daß** das Material nach Abschluß der galvanischen Behandlungsstufen thermisch behandelt, insbesondere geglüht wird.

## Claims

1. Battery casing made of formed, cold-rolled metal sheet which has been provided at least on its inside with an electrodeposited coating containing Ni, Co, Fe, Sn, In, Pd, Bi and/or alloys of these,
**characterised in that** electrically conductive particles in dispersed form, e.g. elemental carbon in the form of fine carbon, graphite or soot particles or for example titanium disulphide, tantalum disulphide or molybdenum silicide or mixtures thereof are embedded in the electrodeposited coat in order to reduce the internal resistance of the battery ultimately produced.

2. Battery casing in accordance with Claim 1, **characterised in that** the carbon content of the electrodeposited coating is 0.7% to 15%.

3. Battery casing in accordance with Claim 1 or Claim 2, **characterised in that** the thickness of the electrodeposited coating is 0.2 µm to 8 µm on one side or on both sides.

4. Method for the production of metal strip for battery casings, where cold-rolled metal strip with a thickness of 0.1 to 1 mm is coated on at least one side in an electroplating bath with a coating of Ni, Co, Fe, Sn, In, Pd, Bi and/or alloys of these, where the electroplating bath also contains electrically conductive particles, e.g. elemental carbon in the form of fine carbon, graphite or soot particles, or for example titanium disulphide, tantalum disulphide or molybdenum silicide, where this constituent/these constituents is/are electrodeposited together with the Ni, Co, Fe, Sn, In, Pd, Bi or alloys of these on the starting material.

5. Method in accordance with Claim 4, **characterised in that** the side of the metal sheet receiving the electrically conducting electrodeposited coating is on the inside when it is formed into a battery casing.

6. Method in accordance with Claim 3 or Claim 4, **characterised in that** the carbon is present in the electroplating bath in suspension in the form of particles of finely distributed carbon, graphite or soot.

7. Method in accordance with Claim 6, **characterised by** a particle size of the carbon, graphite or soot particles of 0.5 µm to 15 µm.

8. Method in accordance with one of Claims 4 to 6, **characterised in that** a uniform flow is produced in the electroplating bath during the electrodeposition process.

9. Method in accordance with Claim 8, **characterised in that** the uniform flow is produced by mechanical stirring, recirculation or overflow.

10. Method in accordance with Claim 8 or Claim 9, **characterised by** a forced electrolyte flow rate from 6 to 10 m/s.

11. Method in accordance with one of Claims 8 to 10, **characterised in that** the electroplating bath contains substances which promote stable suspension and/or substances which reduce coagulation.

12. Method in accordance with one of Claims 4 to 11, **characterised in that** the electroplating bath contains substances (so-called brighteners) which lead to the production of hard, brittle deposits.

13. Method in accordance with one of Claims 4 to 12, **characterised in that** the electroplating bath contains brighteners or substances which inhibit pore formation.

14. Method in accordance with one of Claims 4 to 13, **characterised in that** the electrodeposition process is performed in several stages and that the electroplating bath contains elemental carbon in at least one of these stages.

15. Method in accordance with Claim 14, **characterised in that** the material is heat treated or annealed between the electrodeposition process stages.

16. Method in accordance with Claim 14, **characterised in that** the material is heat treated, in particular by annealing, after completion of the electrodeposition process stages.

## Revendications

1. Gaine de pile en une tôle laminée à froid et ayant subi un formage, qui est dotée au moins à sa face intérieure d'un revêtement réalisé galvaniquement, contenant les métaux Ni, Co, Fe, Sn, In, Pd, Bi et / ou leurs alliages,
**caractérisée en ce que**
pour la diminution de la résistance intérieure de la future pile, des particules conductrices de l'électricité comme par exemple du carbone élémentaire sous forme de carbone fin, de graphite ou de noir de carbone, ou par exemple du bisulfure de titane, du bisulfure de tantale ou du siliciure de molybdène, ou des mélanges de ces derniers, sont incorporés dans l'enduit galvanique sous une forme dispersée.

2. Gaine de pile selon la revendication 1, **caractérisée en ce que** la teneur en carbone du placage galvanique est de 0,7 à 15 %.

3. Gaine de pile selon la revendication 1 ou la revendication 2, **caractérisée en ce que** l'épaisseur du placage galvanique est de 0,2 µm à 8 µm sur une face ou sur les deux faces.

4. Procédé de fabrication de feuillard pour les gaines de piles, dans lequel la tôle laminée à froid d'une épaisseur de 0,1 à 1 mm est dotée dans un bain galvanique, au moins sur une face, d'un placage de Ni, Co, Fe, Sn, In, Pd, Bi et / ou leurs alliages, moyennant quoi le bain galvanique contient comme autres composants des particules conductrices de l'électricité comme par exemple du carbone élémentaire sous forme de carbone fin, de graphite ou de noir de fumée, ou par exemple du bisulfure de titane, du bisulfure de tantale ou du siliciure de molybdène, ce ou ces composants étant déposés ensemble avec le Ni, le Co, le Fe, le Sn, le In, le Pd, le Bi, respectivement leurs alliages sur le matériau de départ.

5. Procédé selon la revendication 4, **caractérisé en ce que**, lors du façonnage de la tôle en une gaine de pile, la face de celle-ci comportant la couche galvanique dotée des composants conducteurs de l'électricité se trouve à l'intérieur.

6. Procédé selon la revendication 3 ou la revendication 4, **caractérisé en ce que** le carbone est en suspension dans le bain galvanique comme carbone, graphite ou noir de fumée finement dispersé en particules.

7. Procédé selon la revendication 6, **caractérisé par** une granulométrie des particules de carbone, de graphite ou de noir de fumée de 0,5 µm à 15 µm.

8. Procédé selon l'une quelconque des revendications 4 à 6, **caractérisé en ce qu'**un écoulement uniforme est engendré dans le bain galvanique pendant le processus de galvanisation.

9. Procédé selon la revendication 8, **caractérisé en ce que** l'écoulement uniforme est engendré par agitation mécanique, retournement ou noyage.

10. Procédé selon la revendication 8 ou la revendication 9, **caractérisé par** une vitesse d'écoulement de l'électrolyte de 6 à 10 m/s.

11. Procédé selon l'une quelconque des revendications 8 à 10, **caractérisé en ce que** le bain galvanique contient des substances stabilisatrices de suspension et / ou inhibitrices de coagulation.

12. Procédé selon l'une quelconque des revendications 4 à 11, **caractérisé en ce que** le bain galvanique contient des substances qui conduisent à des couches dures et fragiles (lustrants).

13. Procédé selon l'une quelconque des revendications 4 à 12, **caractérisé en ce que** le bain galvanique contient des brillanteurs ou des agents anti-pores

14. Procédé selon l'une quelconque des revendications 4 à 13, **caractérisé en ce que** le dépôt galvanique s'effectue en plusieurs étapes, et **en ce que** lors d'une au moins de ces étapes, le bain galvanique contient du carbone élémentaire.

15. Procédé selon la revendication 14, **caractérisé en ce que** le matériau est traité thermiquement ou porté au rouge entre les étapes de traitement galvanique.

16. Procédé selon la revendication 14, **caractérisé en ce qu'**après la fin des étapes de traitement galvanique, le matériau est traité thermiquement, en particulier porté au rouge.
